# EUROPÄISCHE PATENTSCHRIFT

(11) **EP 2 384 849 B1**
(45) Veröffentlichungstag und Bekanntmachung des Hinweises auf die Patenterteilung: **11.07.2018**
(21) Anmeldenummer: 11162792.3
(22) Anmeldetag: 18.04.2011
(51) Int. Cl.: B21K 21/14, B21K 21/16, B21J 5/08, B23P 15/28, B23P 15/32, B21K 5/02, B23B 51/06

(54) **Herstellungsverfahren für einen Hohlbohrer**
Manufacturing method for a hollow drill
Procédé de fabrication d'une mèche creuse

(30) Priorität: 03.05.2010 DE 102010028474
(43) Veröffentlichungstag der Anmeldung: 09.11.2011
(73) Patentinhaber: HILTI Aktiengesellschaft, 9494 Schaan (LI)
(72) Erfinder: Kosa, Zsolt, 6000, Kecskemét (HU); Foser, Roland, 9494, Schaan (LI); Bohn, Klaus-Peter, 9486, Schaanwald (LI)
(74) Vertreter: Hilti Aktiengesellschaft Corporate Intellectual Property

(56) Entgegenhaltungen:
- EP-A1- 0 374 276
- EP-A2- 0 941 793
- DE-A1- 19 856 986
- DE-A1-102007 053 551
- DE-C- 672 237
- DE-C- 970 565

## Beschreibung

### GEBIET DER ERFINDUNG

Die vorliegende Erfindung betrifft ein Herstellungsverfahren für einen Hohlbohrer.

EP 0 941 793 A2 beschreibt ein Bohrwerkzeug mit einem hülsenförmigen Schaft. Der Schaft weist einen verjüngten Einbettungsabschnitt für ein Bohrplättchen auf. Der Einbettungsabschnitt mit geringerem Durchmesser wird aus einem rohrförmigen Schaft mit gleichmäßigen Querschnitt durch Reduzieren des Durchmessers erfolgen, wobei sich der vordere Abschnitt völlig schließt. Der vordere Abschnitt wird geschlitzt und das Bohrplättchen eingesetzt.

DE 970 565 C stellt durch Schmieden eines Rohrs einen Schaft für Bergbau-Bohrer her. Der Außendurchmesser des Rohrs entspricht dem Durchmesser eines Spülkopf. Der Spülkopfsitz wird nicht gestaucht, um eine Rissbildung im Kopfbereich und ein Knicken der beim Herstellen des Rohrs entstehenden Walzfasern zu vermeiden, sondern vorteilhafterweise wird nur ein Anschleifen des Spülkopfsitzes benötigt. Ein Bund und ein Ansteckende können durch Stauchen hergestellt werden.

DE 198 56 986 A1 walzt eine Wendel in ein hohles Rohr ein. Auf das umgeformte Rohr wird ein Bohrkopf aufgesetzt.

DE 672 237 C zeigt einen mit Längsbohrungen versehenen Gesteinsbohrer. Ein Kanal zur Abfuhr von Bohrmehl ist mit einem sich längs der Achse ändernden Querschnitt ausgebildet, um Schwingungen zu unterbinden. Zwischen einem Einsteckende und einer Bohrkrone ist der Querschnitt größer als für die Abfuhr notwendig und an den Enden des Kanal nur so groß, wie für die Abfuhr notwendig.

EP 0 374 276 A1 beschreibt einen Bohrer für die Dentalmedizin mit einem Spülkanal.

### OFFENBARUNG DER ERFINDUNG

Das erfindungsgemäße Herstellungsverfahren für einen Bohrer beinhaltet folgende Schritte. Von einem stabförmigen Rohling mit einem Endabschnitt, einem mittleren Abschnitt und einem Hohlraum, der sich entlang einer Achse des Rohlings wenigstens durch den Endabschnitt und den mittleren Abschnitt erstreckt, wird der Endabschnitt radial zur Achse umgeformt, wobei ein Durchmesser des Hohlraums in dem Endabschnitt verringert wird. Erfindungsgemäß wird ein Schneidelement an dem Endabschnitt befestigt. Beispielsweise wird von einem stabförmigen Rohling mit einem ersten Endabschnitt, einem zweiten Endabschnitt, einem mittleren Abschnitt zwischen dem ersten Endabschnitt und dem zweiten Endabschnitt und einem Hohlraum, der sich längs einer Achse des stabförmigen Rohlings erstreckt, der erste Endabschnitt und der zweite Endabschnitt radial zu der Achse umgeformt, wobei ein Durchmesser des Hohlraums in dem ersten und dem zweiten Hohlraum verringert wird. An dem umgeformten ersten Endabschnitt wird ein Schneidelement befestigt. Der umgeformte zweite Endabschnitt wird mit Nuten für ein Einsteckende versehen.

Der Durchmesser des Hohlraums in dem ersten Endabschnitt kann auf weniger als 10 % des Durchmessers in dem mittleren Abschnitt verringert werden. Der Hohlraum kann auch vollständig geschlossen werden. Der Endabschnitt wird dabei soweit zusammengedrückt, dass der Hohlraum vorzugsweise über die gesamte axiale Länge des Endabschnitts beseitigt wird. Der Endabschnitt kann zu einer kreuzförmigen Außenkontur quer zu der Achse umgeformt werden. Die Erfindung sieht vor, dass der Hohlraum in den stabförmigen Rohling gebohrt wird. Ferner kann auch ein stranggepresstes, gezogenes oder anderweitig hergestelltes Rohr als stabförmiger Rohling verwendet werden.

Eine weitere Ausgestaltung sieht vor, dass der stabförmige Rohling längs der Achse umgeformt wird, wobei ein Außendurchmesser des Endabschnitts gegenüber einem Außendurchmesser des mittleren Abschnitts erhöht wird. Ein Stauchen des Rohlings bewirkt ein Verdicken der Wand des Endabschnitts. Das längs aufgestauchte Material kann zum Füllen des Hohlraums bei dem Umformen, durch Quetschen, radial zur Achse genutzt werden.

Ein solcher Hohlbohrer hat einen Schaft, einen Sockel, ein Schneidelement und ein Einsteckende. Der Schaft hat längs einer Achse einen Hohlraum. Auf dem Sockel ist ein Schneidelement durch Fügen befestigt. Der Sockel ist, vorzugsweise ohne Fügezone, mit dem Schaft verbunden. Eingeschlossen, innerhalb des Sockels ist eine Schließfalte längs der Achse angeordnet. Die Schließfalte erstreckt sich nicht bis zu dem umfänglichen Rand des Sockels. Der Sockel weist längs der Achse Falzkanten auf. Die Falzkanten erhöhen eine Steifigkeit des Sockels in axialer Richtung, wodurch eine Meißelwirkung des Bohrers verbessert werden kann.

Der Sockel kann auch einen kreisförmigen Querschnitt haben und je nach Durchmesser des Bohrers den gleichen Durchmesser aufweisen, wie der nachfolgende Schaft.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: Längsschnitt eines beispielhaften Bohrers;
- Fig. 2 bis 4: Querschnitt durch den Bohrer von Fig. 1;
- Fig. 5 bis 8: Längsschnitte eines Rohlings während eines beispielhaften Herstellungsverfahrens für den Bohrer aus Fig. 1;
- Fig. 9 bis 12: Längsschnitte eines Rohlings während eines nicht erfindungsgemäßen Herstellungsverfahrens für den Bohrer aus Fig. 1;
- Fig. 13 bis 16: Längsschnitte eines Rohlings während eines beispielhaften Herstellungsverfahrens für den Bohrer aus Fig. 1

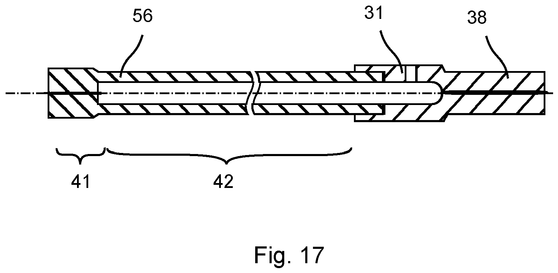

- Fig. 17: Längsschnitt eines Rohlings während eines beispielhaften Herstellungsverfahrens für den Bohrer aus Fig. 1.

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

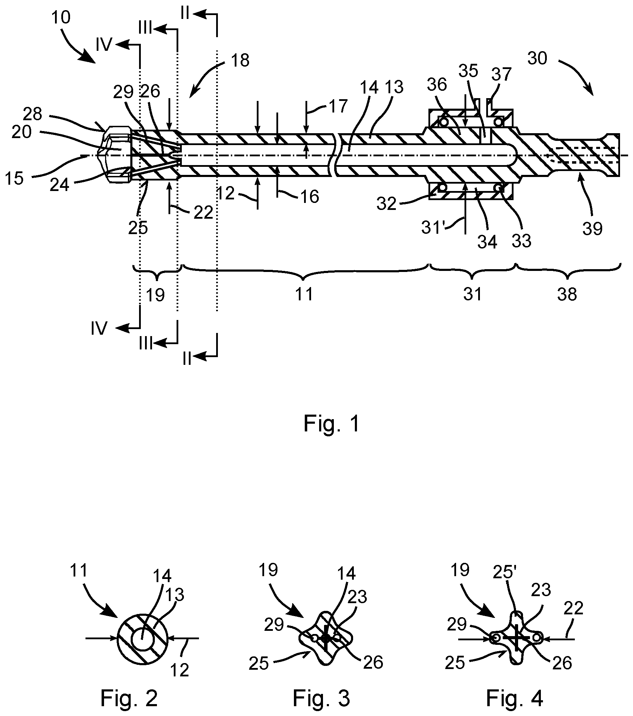

Fig. 1 zeigt einen beispielhaften Hohlbohrer **10** im Längsschnitt, Fig. 2 zeigt einen Querschnitt durch den Hohlbohrer **10** in der Ebene II-II, Fig. 3 einen Querschnitt in der Ebene III-III und Fig. 4 einen Querschnitt in der Ebene IV-IV von Fig. 1.

Ein hohler Schaft **11** des Hohlbohrers **10** ist vorzugsweise zylindrisch mit einem konstanten Außendurchmesser **12.** Eine Wandung **13** des Schafts **11** umschließt einen Hohlraum **14** längs einer Achse **15** des Hohlbohrers **10.** Ein Durchmesser **16** des Hohlraums **14** liegt etwa im Bereich von 20% bis 80% des Außendurchmessers **12** des Schafts **11.** Die Wandung **13** hat vorzugsweise über die gesamte axiale Länge des Schaft **11** eine konstante Wandstärke **17** und weist vorzugsweise keine radialen Öffnungen auf.

An einem vorderen axialen Ende **18** geht der Schaft **11** in einen Sockel **19** für ein Schneidelement **20** über. Der Sockel **19** und der Schaft **11** sind monolithisch aus einem Rohling gebildet und ohne eine zwischenliegende Fügezone miteinander verbunden. Die größte radiale Abmessung **22** des Sockels **19** kann größer als der Durchmesser **12** des Schafts **11** sein. Der Durchmesser **16** oder eine Querschnittsfläche senkrecht zur Achse **15** des Hohlraums **14** verringert sich im Sockel 19 kontinuierlich längs der Achse **15.** Vorzugsweise wird der Hohlraum **14** axial durch den Sockel **19** geschlossen. Alternativ verringert sich die Querschnittsfläche des Hohlraums **14,** z.B. auf weniger als 1% der Querschnittsfläche des Sockels **19** oder weniger als 10% der Querschnittsfläche des Hohlraums **14** im Bereich des Schafts **11.** Ein Querschnitt **23** des Sockels **19** ist kreisförmig oder kreuzförmig oder weist einen anderen, der Zahl der Schneiden angepassten Querschnitt auf und geht von einem kreisförmigen Querschnitt nahe dem Schaft **11** in einen kreuzförmigen Querschnitt an der Stirnfläche **24** über. Fig. 3 und 4 zeigen beispielhaft zwei Schnitte durch den Sockel **19** in verschiedenen Ebenen III-III und IV-IV längs der Achse **15.** Der Sockel **19** hat eine äußere geschlossene Kontur **25,** welche keine Fügezone aufweist. Innerhalb dieser geschlossenen Kontur **25** beinhaltet der Sockel **19** ein oder mehrere radial verlaufenden Schließfalten **26.** Die Schließfalten **26** liegen bevorzugt in einer Ebene aufgespannt durch die Achse **15** und eine radiale Richtung. Das Material des Sockels **19** ist um Falzkanten **25'bz** gebogen, welche die radial äußeren Enden der Kontur **25** bilden. Im Bereich der Schließfalten 26 kann sich das Material gegenüberliegender Flächen berühren, hat jedoch keinen Materialschluss. Öffnungen im Bereich der Schließfalten 26, insbesondere längs der Achse 15 verlaufende Öffnungen, haben eine Abmessung von vorzugsweise weniger als 0,5 mm senkrecht zur Achse 15.

Auf der Stirnfläche **24** des Sockels **19** ist das Schneidelement **20,** z.B. ein monolithischer Bohrkopf aus Hartmetall mit drei oder vier Schneidkanten **28** befestigt, oder im Sockel ist in einem Schlitz eine Schneidplatte aus Hartmetall mit zwei oder mehr Schneidkanten befestigt. Das Schneidelement **20** lässt Bereiche der Stirnfläche **24** frei. Kanäle **29** verlaufen von diesen freien Bereichen der Stirnfläche **24** durch den Sockel **19** zu dem Hohlraum **14.** Vorzugsweise ist eine Öffnung der Kanäle **29** an einem äußeren Rand der Stirnfläche **24.** Die Kanäle **29** können geneigt gegenüber der Achse **15** verlaufen. Durch diese Kanäle **29** kann Bohrmehl aus dem Bohrloch in den Hohlraum **14** angesaugt oder ein Spülfluid aus dem Hohlraum **14** in das Bohrloch eingetrieben werden. Die Kanäle **29** weisen einen Durchmesser von 5% bis 25% des Durchmessers des Sockels **19** auf, z.B. 1 bis 8 mm.

An einem anderen axialen Ende **30** geht der Schaft **11** in ein Anschlussstück **31** für eine Hülse **32** zum Absaugen oder Einblasen über. Vorzugsweise sind der Schaft **11** und das Anschlussstück **31** monolithisch, d.h. ohne Fügezonen miteinander verbunden. Das Anschlussstück hat eine zylindrische Form, deren Außendurchmesser **31'** größer als der Schaft **11** sein kann. Der Hohlraum **14** verlängert sich von dem Schaft **11** axial in den Anschlussstück **31** im Wesentlichen ohne Änderung seines Durchmessers **16.** Vorzugsweise endet der Hohlraum **14** innerhalb des Anschlussstücks **31** und ist axial begrenzt.

Auf das Anschlussstück **31** ist die Hülse **32** geschoben, welche sich relativ zu dem Bohrer **10** drehen kann. Dichtelemente **33** schließen einen ringförmigen Absaugraum **34** zwischen der Hülse **32** und dem Anschlussstück **31** fluiddicht und/oder staubdicht ab. Der Absaugraum **34** ist über einen Anschlusskanal **35** mit dem Hohlraum **14** verbunden. Der Anschlusskanal **35** verläuft radial, z.B. senkrecht oder schräg zur Achse **15,** durch eine Wandung **36** im Anschlussstück **31.** Durch den Anschlusskanal **35** kann Bohrmehl aus dem Hohlraum abgesaugt oder ein Fluid in den Hohlraum **14** eingetrieben werden. Die Hülse **32** weist einen Flansch **37** zum Anschließen an eine Pump- oder Gebläseeinrichtung auf.

Ein Einsteckende **38** des Bohrers **10** grenzt axial an das Anschlussstück **31** an. Das Einsteckende **38** kann ein oder mehrere axial offene und/oder axial geschlossene Nuten **39** für eine Arretierung des Bohrers **10** in einer Werkzeugaufnahme und für eine Drehmitnahme des Bohrers **10** durch die Werkzeugaufnahme aufweisen.

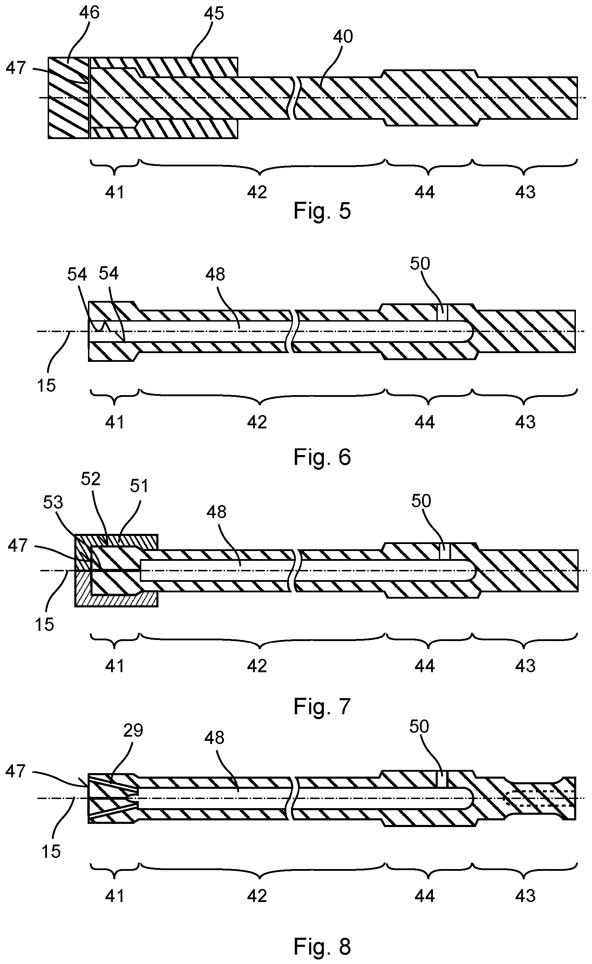

Ein Herstellungsverfahren für den beispielhaften Bohrer **10** wird mit Bezug auf die Fig. 5 bis 8 erläutert. Ausgangspunkt für das Herstellungsverfahren ist ein massiver zylindrischer Rohling **40.** Der zylindrische Rohling **40** wird derart umgeformt, dass ein vorderer Endabschnitt **41** des Rohlings **40** für den Sockel **19** einen größeren Durchmesser erhält, als ein mittlerer Abschnitt **42** des Rohlings **40** für den Schaft **11.** Ein hinterer Endabschnitt **43** des Rohlings **41** wird vorzugsweise auf die typischen Querschnitte von auf dem Markt befindlichen Werkzeugaufnahmen angepasst. Zwischen dem hinteren Endabschnitt **43** und dem mittleren Abschnitt **42** kann ein weiterer Abschnitt **44** für das Anschlussstück **31** zu einem Durchmesser größer als der des mittleren Abschnitt **42** umgeformt werden. Der mittlere Abschnitt **42,** der hintere Endabschnitt **43** und der weitere Abschnitt **44** haben vorzugsweise eine zylindrische Außenkontur. Der vordere Endabschnitt **41** kann mit einer zylindrischen oder eine kegelstumpfförmigen Außenkontur geformt werden.

Ein beispielhafter Umformschritt für den vorderen Endabschnitt **41** ist in Fig. 5 dargestellt. Eine Werkzeugform **45** umschließt umfänglich den vorderen Endabschnitt **41** des zylindrischen Rohlings **40** und wenigstens einen angrenzenden Teil des mittleren Abschnitts **42.** Zwischen der Werkzeugform **45** und dem vorderen Endabschnitt **41** wird ein ringförmiger Zwischenraum definiert, an dem mittleren Abschnitt **42** liegt die Werkzeugform **45** bündig an. Ein Stempel **46** staucht axial den Rohling **40,** indem der Stempel **46** auf eine Stirnfläche **47** des zylindrischen Rohlings **40** drückt. Das verstauchte Material wird in den Zwischenraum geschoben. Der gestauchte Rohling **40** füllt danach den ringförmigen Zwischenraum wie dargestellt aus.

Ein alternativer Umformschritt beginnt mit einem zylindrischen Rohling **40** dessen Außendurchmesser dem Außendurchmesser des vorderen Endabschnitts **41** entspricht. Ein Durchmesser im Bereich des mittleren Abschnitts **42** wird durch Rollwalzen auf das gewünschte Maß verringert. Der Durchmesser des hinteren Endabschnitts und des weiteren Abschnittes können analog nach den beschriebenen Umformschritten gestaltet werden.

In den umgeformten Rohling **40** wird ein Hohlraum **48** z.B. in der Form eines Sacklochs ausgehend von der Stirnfläche **47** des vorderen Endabschnitts **41** längs einer Achse **49** des Rohlings **40** gebohrt (Fig. 6). Der Hohlraum **48** erstreckt sich durch den vorderen Endabschnitt **41** und den mittleren Abschnitt **42** bis in den weiteren Abschnitt **44.** Eine radial, bis zu dem Hohlraum **48** verlaufende Bohrung **50** wird in den Rohling **40** im weiteren Abschnitt **44** gebohrt.

In dem vorderen Endabschnitt **41** wird der Hohlraum **48** durch ein Umformen in radialer Richtung reduziert, um den Sockel **19** zu bilden (Fig. 7). Eine mehrteilige Presse **51** oder ein Schmiedewerkzeug quetscht in radialer Richtung die Mantelfläche **52** des vorderen Endabschnitts **41** zusammen. Ein Durchmesser des Hohlraums **48** hat danach höchstens 10% des Durchmessers im mittleren Abschnitt **42.** Vorzugsweise wird der Hohlraum **48** geschlossen, d.h. der Hohlraum **48** wird vorzugsweise vollständig durch das umgeformte Material ausgefüllt. Der Sockel **41** kann aufgrund des radialen Umformens einen kreuzförmigen Querschnitt aufweisen. Entlang der Achse **15** kann eine Schließfalte **53** aus den vormals gegenüberliegenden Innenwänden **54** des aufgebohrten vorderen Endabschnitts **41** gebildet werden. Das Umformen kann kalt oder warm z.B. mit rotglühendem Rohling **40** durchgeführt werden.

In den vorderen Endabschnitt **41** kann auch ein zylindrischer oder kegelförmiger Stift aus Stahl vor dem radialen Umformen eingesetzt werden. Der Stift hat vorzugsweise die Länge des vorderen Endabschnitts **41.** Ein Durchmesser des Stifts kann geringer als der Durchmesser des Hohlraums **48** sein.

In den Sockel **19** werden die Kanäle **29** gebohrt (Fig. 8). Anschließend wird der Bohrkopf **20** oder ein anderes Schneidelement auf der Stirnfläche **47** des Sockels **19** befestigt (Fig. 1). Dazu kann eine Vertiefung in die Stirnfläche eingesenkt werden und in die Vertiefung das Schneidelement eingesetzt werden. In dem hinteren Endabschnitt **43** werden Nuten **39** für das Einsteckende **38** eingebracht. Die Hülse **32** wird über die radiale Bohrung **50** geschoben.

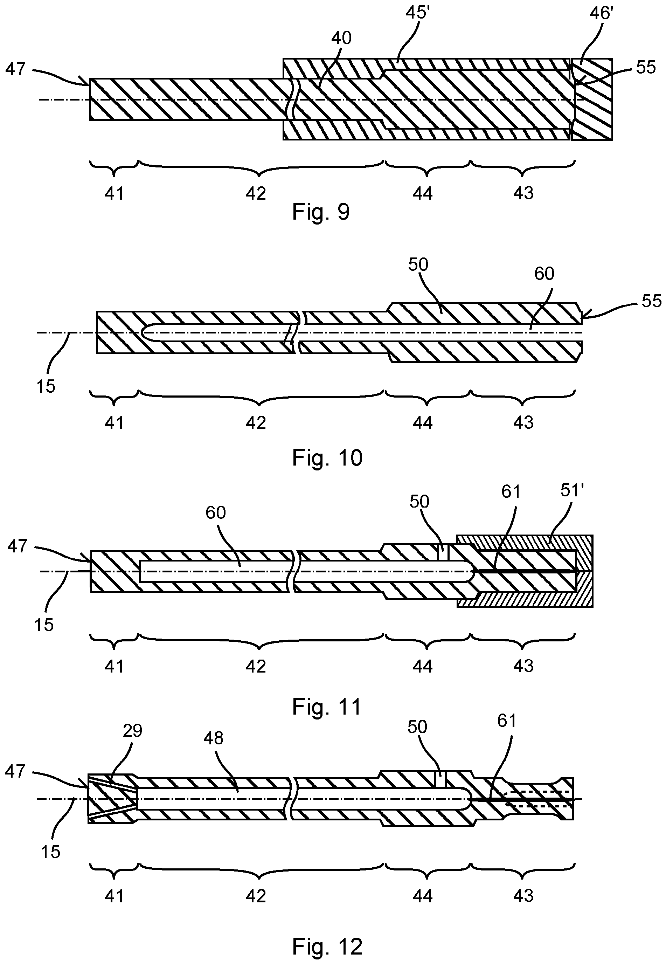

In einer nicht erfindungsgemäßen Ausführungsform wird ein Durchmesser des hinteren Endabschnitts **43** mittels eines Stauchverfahrens vergrößert (Fig. 9). Ein Formwerkzeug **45'** umschließt den hinteren Endabschnitt **43** und vorzugsweise einen Teil des mittleren Abschnitts **42.** Das Formwerkzeug **45'** hat im Bereich des hinteren Endabschnitts **43** einen größeren Innendurchmesser, und liegt nicht an dem anfänglichen Rohling **40** an. Beim Stauchen wird das von einem Stempel **46'** verdrängte Material radial in den Hohlraum des Formwerkzeugs **45'** gepresst. Der hintere Endabschnitt **43** wird kürzer und dicker.

Ausgehend von der Stirnfläche **55** des hinteren Endabschnitts **43** wird ein Sackloch **48** in den Rohling **40** gebohrt. Das Sackloch **48** endet vor dem vorderen Abschnitt **41** (Fig. 10). Der hintere Endabschnitt **43** wird in radialer Richtung gequetscht, bis der Hohlraum gebildet durch das Sackloch vorzugsweise längs des gesamten hinteren Abschnitts **43** für das Einsteckende geschlossen, d.h. beseitigt wird (Fig. 11). In dem hinteren Endabschnitt **43** verbleibt eine axial verlaufende Schließfalte **61.** Das Quetschen kann durch ein Formwerkzeug **51'** erfolgen. Der derart umgeformte Rohling kann mit den Kanälen, dem Absaugkanal, dem Schneidelement und den Nuten versehen werden, wie oben beschrieben (Fig. 12).

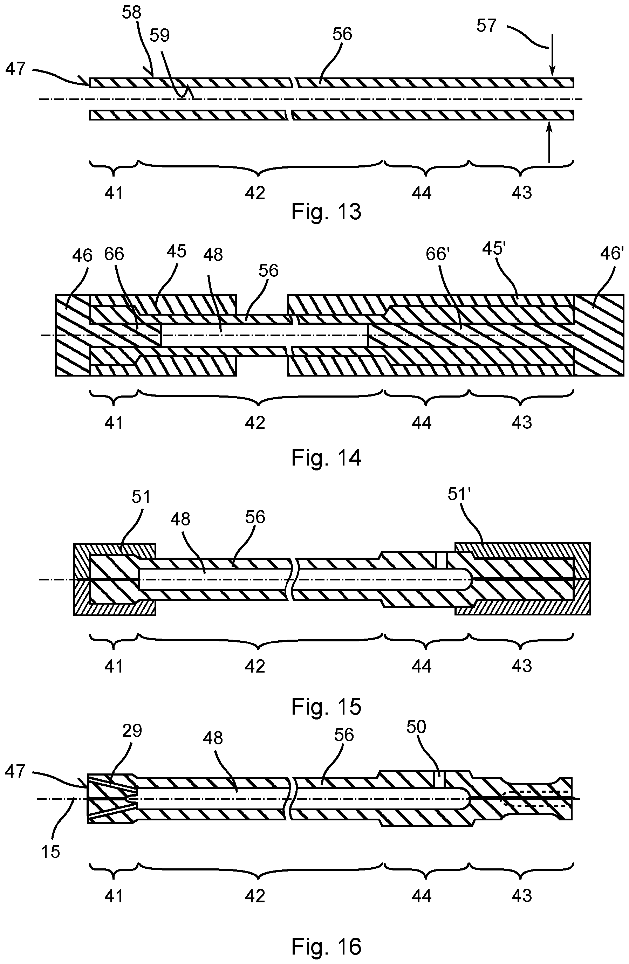

Bei einer alternativen Ausgestaltung wird ein rohrförmiger Rohling **56** zu dem Bohrer **10** umgeformt (Fig. 13). Der Rohling **56** basiert vorzugsweise auf einem hohlen Stangenprofil mit einem über die gesamte Länge gleichförmigen Querschnitt **57.** Der Querschnitt **57** ist ringförmig mit einem vorzugsweise kreisförmigen oder ovalen Außenkontur **58** und einer gleichgestalteten Innenkontur **59.**

Ein vorderer Endabschnitt **41** des Rohlings **56** wird gestaucht, um lokal den Außendurchmesser zu erhöhen (Fig. 14). Ein verwendetes Formwerkzeug **45** definiert einen ringförmigen Zwischenraum um den vorderen Endabschnitt **41** und schließt bündig mit einem mittleren Abschnitt **42** ab. Ein Zapfen **66** kann in den Hohlraum **48** des Rohlings **56** geschoben werden, insbesondere in den vorderen Endabschnitt **41.** Der Zapfen **66** liegt vorzugsweise vollumfänglich an der Innenwand des Hohlraums **48** an. Ein Stempel **46** staucht den Rohling **56** längs der Achse. Ein hinterer Endabschnitt **43** wird vorzugsweise ebenfalls längs der Achse gestaucht. Der Zapfen **66** wird entfernt.

Der gesamte vordere Endabschnitt **41** wird nun in radialer Richtung durch ein Werkzeug **51, 51'** gequetscht, wodurch der Hohlraum **48** im vorderen Endabschnitt **41** reduziert und vorzugsweise in Richtung zum Sockel geschlossen wird (Fig. 15). Der hintere Endabschnitt **43** wird für das Einsteckende radial gequetscht, wobei der Hohlraum **48** in Richtung zum Einsteckende geschlossen wird. Der derart umgeformte Rohling **56** kann mit den Kanälen, dem Absaugkanal, dem Schneidelement und den Nuten versehen werden, wie oben beschrieben (Fig. 16).

Eine nicht erfindungsgemäße Ausgestaltung sieht vor, den Hohlraum **48** des Bohrers **10** aus zwei gefügten Stücken zusammenzusetzen. Ein erstes Stück wird durch aus dem rohrförmigen Rohling **56** gebildet, dessen vorderer Endabschnitt **41** axial gestaucht und danach radial quetscht wurde. Das zweite Stück beinhaltet das Anschlussstück **31** und das Einsteckende **38.** Das Anschlussstück **31** ist hülsenförmig mit einer Öffnung zur Aufnahme des hinteren Endabschnitts **43** des Rohlings **56** ausgebildet. Die beiden gefügten Stücke können formschlüssig, kraftschlüssig und/oder materialschlüssig gefügt werden.

## Patentansprüche

1. Herstellungsverfahren für einen Bohrer mit den Schritten:
Bereitstellen eines stabförmigen Rohlings (40), der einen Endabschnitt (41) und einen mittleren Abschnitt (42) aufweist;
Umformen des Rohlings (40) derart, dass der Außendurchmesser des Endabschnitts (41) größer als der Außendurchmesser des mittleren Abschnitts wird;
Bohren eines sich wenigstens durch den Endabschnitt (41) und den mittleren Abschnitt (42) längs zu einer Achse (15) des Rohlings (40, 56) erstreckenden Hohlraum (48) in den umgeformten Rohling (41);
Quetschen des Endabschnitts (41) radial zu der Achse (15), wobei ein Durchmesser des Hohlraums (48) in dem Endabschnitt (41) verringert wird;
Befestigen eines Schneidelements (20) an dem umgeformten Endabschnitt (41).

2. Herstellungsverfahren nach Anspruch 1, **dadurch gekennzeichnet, dass** ein Querschnitt des Hohlraums (48) in dem Endabschnitt (41) auf weniger als 20 % des Querschnitts in dem mittleren Abschnitt (42) verringert wird.

3. Herstellungsverfahren nach einem der vorhergehenden Ansprüche, **dadurch gekennzeichnet, dass** der Endabschnitt (41) zu einer vom Kreisumfang abweichenden Außenkontur quer zu der Achse (15) mit einer der Anzahl der Schneiden korrespondierender Anzahl von Nuten umgeformt wird.

4. Herstellungsverfahren nach einem der vorhergehenden Ansprüche, **dadurch gekennzeichnet, dass** zum Umformen der stabförmige Rohling (40) längs der Achse (15) gestaucht wird, wobei ein Außendurchmesser des Endabschnitts gegenüber einem Außendurchmesser des mittleren Abschnitts erhöht wird.

## Claims

1. Method of manufacturing a drill, comprising the steps:
providing a rod-shaped blank (40) having an end portion (41) and a central portion (42),
reshaping the blank (40) in such a manner that the outer diameter of the end portion (41) is greater than the outer diameter of the central portion,
drilling a cavity (48) in the reshaped blank (41), the cavity extending at least through the end portion (41) and the central portion (42) longitudinally to an axis (15) of the blank (40, 56),
squeezing the end portion (41) radially to the axis (15), the diameter of the cavity (48) in the end portion (41) being reduced, and
fastening a cutting element (20) to the reshaped end portion (41).

2. Manufacturing method according to claim 1, **characterised in that** the cross section of the cavity (48) in the end portion (41) is reduced to less than 20 % of the cross section in the central portion (42).

3. Manufacturing method according to one of the preceding claims, **characterised in that** the end portion (41) is reshaped transversely to the axis (15) to give an outer contour deviating from the circular circumference with a number of grooves corresponding to the number of cutting edges.

4. Manufacturing method according to one of the preceding claims, **characterised in that** the rod-shaped blank (40) is upset along the axis (15) for reshaping, the outer diameter of the end portion being increased relative to the outer diameter of the central portion.

## Revendications

1. Procédé de fabrication d'un foret, comportant les étapes consistant à :
fournir une ébauche en forme de tige (40) comportant une partie d'extrémité (41) et une partie centrale (42),
former l'ébauche (40) de sorte que le diamètre extérieur de la partie d'extrémité (41) est plus grand que le diamètre extérieur de la partie centrale,
percer un espace creux (48) s'étendant au moins à travers la partie d'extrémité (41) et la partie centrale (42) le long d'un axe (15) de l'ébauche (40, 56) dans l'ébauche formée (41),
comprimer la partie d'extrémité (41) radialement à l'axe (15), un diamètre de l'espace creux (48) dans la partie d'extrémité (41) étant réduit,
fixer un élément tranchant (20) sur la partie d'extrémité formée (41).

2. Procédé de fabrication selon la revendication 1, **caractérisé en ce qu'**une section transversale de l'espace creux (48) dans la partie d'extrémité (41) est réduite à moins de 20 % de la section transversale dans la partie centrale (42).

3. Procédé de fabrication selon l'une des revendications précédentes, **caractérisé en ce que** la partie d'extrémité (41) jusqu'à un contour extérieur transversal à l'axe (15) s'écartant de la circonférence circulaire est formée avec un nombre de rainures correspondant au nombre de bords tranchants.

4. Procédé de fabrication selon l'une des revendications précédentes, **caractérisé en ce que** pour le formage, l'ébauche en forme de tige (40) est comprimée le long de l'axe (15), dans lequel un diamètre extérieur de la partie d'extrémité est augmenté par rapport à un diamètre extérieur de la partie centrale.
